(19) Europäisches Patentamt / European Patent Office / Office européen des brevets

(11) **EP 2 415 218 B1**

(12) # EUROPÄISCHE PATENTSCHRIFT

(45) Veröffentlichungstag und Bekanntmachung des Hinweises auf die Patenterteilung:
**17.04.2013 Patentblatt 2013/16**

(21) Anmeldenummer: **10705153.4**

(22) Anmeldetag: **19.02.2010**

(51) Int Cl.:
***H04L 12/66*** *(2006.01)*

(86) Internationale Anmeldenummer:
**PCT/EP2010/052146**

(87) Internationale Veröffentlichungsnummer:
**WO 2010/112267 (07.10.2010 Gazette 2010/40)**

(54) **STEUERGERÄT IN EINEM NETZWERK, NETZWERK UND ROUTINGVERFAHREN FÜR NACHRICHTEN IN EINEM NETZWERK**

CONTROL DEVICE IN A NETWORK, NETWORK, AND ROUTING METHOD FOR MESSAGES IN A NETWORK

APPAREIL DE COMMANDE SUR UN RÉSEAU, RÉSEAU ET PROCÉDÉ DE ROUTAGE DE MESSAGES SUR UN RÉSEAU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.03.2009 DE 102009002007**

(43) Veröffentlichungstag der Anmeldung:
**08.02.2012 Patentblatt 2012/06**

(73) Patentinhaber: **Robert Bosch GmbH**
**70442 Stuttgart (DE)**

(72) Erfinder:
• **LUTZ, Bernd**
**72160 Horb (DE)**
• **TODOROV, Stoyan**
**68165 Mannheim (DE)**

(56) Entgegenhaltungen:
**US-A1- 2007 140 282     US-A1- 2008 037 429**
**US-B1- 6 594 264**

• **SHA L ET AL: "Real-time scheduling support in Futurebus+" PROCEEDINGS OF THE REAL TIME SYSTEMS SYMPOSIUM. LAKE BUENA VISTA, DEC. 5 - 7, 1990; [PROCEEDINGS OF THE REAL TIME SYSTEMS SYMPOSIUM], WASHINGTON, IEEE. COMP. SOC. PRESS, US LNKD- DOI: 10.1109/REAL.1990.128765, Bd. SYMP. 11, 5. Dezember 1990 (1990-12-05), Seiten 331-340, XP010022063 ISBN: 978-0-8186-2112-3**

**Beschreibung**

Stand der Technik

Die Erfindung betrifft ein Steuergerät in einem Netzwerk, ein Netzwerk und ein Routingverfahren für Nachrichten in einem Netzwerk.

In vielen Bereichen werden heute Netzwerke eingesetzt, d.h. Komponenten tauschen Datenpakete über Netzwerkstrukturen wie Netzwerkcontroller aus. Je nach Aufbau eines Netzwerks kann es jedoch zu Staus bei der Weitergabe von Netzwerkcontroller zu Netzwerkcontroller kommen, d.h. Pakete können nicht weitergeleitet werden, weil die Puffer der nachfolgenden Controller keine weiteren Pakete aufnehmen können. Dieser Effekt ist in praktisch allen Netzwerkauslegungen zu beobachten und lässt sich im besten Fall in der Wahrscheinlichkeit des Auftretens minimieren.

In der Forschung kommen zur Lösung des Stauproblems meist adaptive Routingalgorithmen zum Einsatz, die Staus erkennen und entsprechend alternative Routen für Datenpakete verwenden. Diese Verfahren sind jedoch auf eine Vielzahl an möglichen Routen angewiesen und können das Stauproblem ebenfalls nicht vollständig lösen. Patent EP-1895720 A1 gibt ein Beispiel für einen Lösungsansatz des Problems über adaptive Routingverfahren in einem On-Chip-Netzwerk.

Aus der US 2008/037429 A1 ist ein Verfahren zum Fallenlassen niederpriorer Pakete bei der Übertragung über eine drahtlose Kommunikationsverbindung bekannt. Die US 2007/140282 A1 offenbart ein Verfahren zur Verwaltung von Warteschlangen in On-Chip-Netzwerken.

Für bestimmte Einsätze von Netzwerken, z.B. von On-Chip-Netzwerken in Kfz-Steuergeräten, führen sowohl Staus als auch adaptive Routingalgorithmen zu nicht-deterministischen Paketlaufzeiten und damit zu unvorhersagbarem Gesamt-Timing-Verhalten im Steuergerät. Außerdem kosten adaptive Routingverfahren zusätzlichen

Aufwand wie z.B. zusätzlichen Platz durch zusätzliche Logik auf den Controllern, um eine Route optimal bestimmen zu können.

Offenbarung der Erfindung

Vorteile der Erfindung

Die Erfindung gemäß den unabhängigen Ansprüchen betrifft einen Netzwerkcontroller in einem Netzwerk, ein Netzwerk bzw. ein Routingverfahren für Nachrichten in einem Netzwerk. Dabei tauschen Netzwerkcontroller in dem Netzwerk Prioritätsinformationen über die in ihren Nachrichtenspeichern gespeicherten Nachrichten aus. Im Fall eines Nachrichtenstaus, also eines vollen Nachrichtenspeichers eines ersten der Netzwerk-controller, kann durch den Vergleich der Prioritätsinformationen ein Vorgang initiiert werden, bei welchem eine erste Nachricht niedrigerer Priorität in dem vollen Nachrichtenspeicher ausgetauscht, bzw. ersetzt wird durch eine zweite Nachricht höherer Priorität aus einem Nachrichtenspeicher eines zweiten, benachbarten Netzwerkcontrollers, wobei die zweite Nachricht für eine Übertragung in den vollen Nachrichtenspeicher des ersten Netzwerkcontrollers vorgesehen ist. Die Erfindung beschreibt also ein vorteilhaftes Routingverfahren zur Reduzierung negativer Auswirkungen von Nachrichtenstaus bzw. zur Reduzierung von Nachrichtenstaus mit vergleichsweise geringem Rechneraufwand, welches Verfahren vor allem die Laufzeiten von Nachrichten hoher /höchster Priorität in Fällen eines Nachrichtenstaus reduzieren kann. Ein besonderer Vorteil ist dabei, dass das Routing ohne aufwändige Rechnerausstattung für adaptive / dynamische Routenplanung ankommt und auch keine Informationsspeicherung wie Laufzeit-Tabellen und ähnliches benötigt wird, sondern dass der Stauproblematik durch eine einfach umzusetzende Kommunikation zweier benachbarter Netzwerkcontroller eines Netzwerks begegnet wird. Dadurch wird technischer Aufwand und damit Kosten gespart. Besonders vorteilhaft ist das erfindungsgemäße Routing damit z.B. für On-Chip-Netzwerke oder Netzwerke auf einer Platine, bei welchen Platz- und Kostenersparnis besonders bedeutend sind.

Weitere Vorteile und Verbesserungen ergeben sich durch die Merkmale der abhängigen Ansprüche.

In einer vorteilhaften Ausgestaltung initiiert ein Netzwerkcontroller einen Nachrichtenaustausch, wenn sein Nachrichtenspeicher voll ist und er durch einen Vergleich der Prioritätsinformationen der eigenen Nachrichten mit den empfangenen Prioritätsinformationen der Nachrichten eines Nachbarcontrollers feststellt, dass im Nachbarcontroller eine Nachricht höherer Priorität als die Priorität einer im eigenen, vollen Nachrichtenspeicher gespeicherten Nachricht für die Übertragung in den vollen Nachrichtenspeicher vorgesehen ist. Diese Ausgestaltung verwirklicht die beschriebenen Vorteile des Routingverfahrens für den Fall dass der Nachrichtenspeicher eines erfindungsgemäßen Netzwerkcontrollers voll ist. Vorteilhafterweise braucht dabei nur der initiierende Netzwerkcontroller zum Vergleich der Prioritätsinformationen und zum Initiieren eines Nachrichtenaustauschs ausgestaltet sein, z.B. kann ein solcher Netzwerkcontroller eingesetzt werden an einem Netzwerkknoten, der besonders anfällig ist für einen vollen Nachrichtenspeicher.

Ein weitere vorteilhafte Ausführung geht aus von einem Netzwerkcontroller, welcher einen Nachrichtenaustausch initiiert, wenn der Nachrichtenspeicher seines Nachbarcontrollers voll ist und er durch einen Vergleich der Prioritätsinformationen der eigenen Nachrichten mit den empfangenen Prioritätsinformationen der Nachrichten eines Nachbarcontrollers feststellt, dass im Nachbarcontroller eine Nachricht gespeichert ist, welche eine niedrigere Priorität aufweist, als eine Nachricht, die im eigenen Nachrichtenspeicher des Netzwerkcontrollers gespeichert ist und für eine Übertragung in den Nachrichtenspeicher des Nachbarcontrollers vorgesehen ist. Diese Ausgestaltung verwirklicht die beschriebenen Vorteile des Routingverfahrens für den Fall dass der Nachrichtenspeicher eines Nachbarcontrollers eines erfindungsgemäßen Netzwerkcontrollers voll ist. Vorteilhafterweise braucht dabei nur der initiierende Netzwerkcontroller zum Vergleich der Prioritätsinformationen und zum Initiieren eines Nachrichtenaustauschs ausgestaltet sein, z.B. kann ein solcher Netzwerkcontroller benachbart zu einem Netzwerkknoten eingesetzt werden, welcher besonders anfällig ist für einen vollen Nachrichtenspeicher.

Weiterhin kann es eine zweckmäßige Ausgestaltung sein, Nachrichten niedrigerer Priorität durch die Netzwerkcontroller in ihrer Priorität zu erhöhen in Abhängigkeit z.B. der Anzahl von Ersetzungsvorgängen und / oder der Anzahl an besuchten Netzwerkcontrollern. Dadurch kann vermieden werden, dass Nachrichten niedrigerer Priorität durch Nachrichtenstau und besonders auch durch den Austausch mit Nachrichten höherer Priorität sehr lange Laufzeiten aufweisen oder im Extremfall sogar nie das Bestimmungsziel erreichen.

Vorteilhafterweise kann der erfindungsgemäße Netzwerkcontroller einen reservierten Speicherplatz zum Zwischenspeichern einer Nachricht beim Austausch der Nachrichten verschiedener Priorität aufweisen. In einer besonderen Ausgestaltung ist dieser Speicherplatz als separater Zwischenspeicher des Netzwerkcontrollers realisiert. Durch einen reservierten Speicherplatz kann der Nachrichtenaustausch von Nachrichten verschiedener Priorität im Fall eines Nachrichtenstaus ablaufen, auch wenn die Daten-übertragungswege oder die beteiligten Netzwerkcontroller oder die auszutauschenden Nachrichten nicht für eine simultane Übertragung bzw. für einen simultanen Nachrichten-Austausch geeignet sind.

In einem vorteilhaften Ausführungsbeispiel werden die Prioritätsinformationen zwischen den zwei benachbarten Netzwerkcontollern über andere Datenkanäle übertragen als die Nachrichten. Dadurch wird eine Belastung der Nachrichtenübertragungsrate durch weitere Übertragungen auf den selben Datenkanälen vermieden. In einer alternativen vorteilhaften Ausgestaltung werden die Prioritätsinformationen über die gleichen Datenkanäle wie die Nachrichten übertragen. Dadurch kann vorteilhafterweise der Aufwand weiterer Verbindungen vermieden werden.

Es kann vorteilhaft sein, die Prioritätsinformationen der Nachrichten in den Datenpaketformaten der Nachrichten vorzusehen, damit der Aufwand bzw. die Datenlast zusätzlicher Übertragung von Prioritätsinformationen vermieden wird. Gegebenenfalls kann es auch vorteilhaft sein, die Prioritätsinformationen separat bzw. zusätzlich zu den Nachrichten zu übertragen, z.B. für den Fall, dass ein vorgeschriebenes Datenpaketformat keine Speicherung solcher Informationen vorsieht bzw. erlaubt.

Zeichnungen

Ausführungsbeispiele der Erfindung sind in den Zeichnungen dargestellt und in der nachfolgenden Beschreibung näher erläutert. Die Zeichnungen sind lediglich beispielhaft und schränken den allgemeinen Erfindungsgedanken nicht ein. Dabei kennzeichnen übereinstimmende letzte zwei Ziffern der Bezugszeichen gleiche bzw. vergleichbare Elemente.

Es zeigen:

Figur 1     ein Netzwerk und

Figur 2     ein Beispiel für einen erfindungsgemäßen Austausch von Nachrichten unterschiedlicher Priorität zwischen zwei benachbarten Netzwerkcontrollern eines Netzwerkes.

Beschreibung der Ausführungsbeispiele

Im Folgenden wird das erfindungsgemäße Routing, bzw. der erfindungsgemäße Netzwerkcontroller und das erfindungsgemäße Netzwerk am besonders vorteilhaften Beispiel eines On-Chip-Netzwerks erläutert, ohne dass dadurch die Erfindung auf diese Art von Netzwerken eingeschränkt werden soll. Vielmehr ist die Erfindung auch für andere Netzwerke ohne Einschränkung einsetzbar.

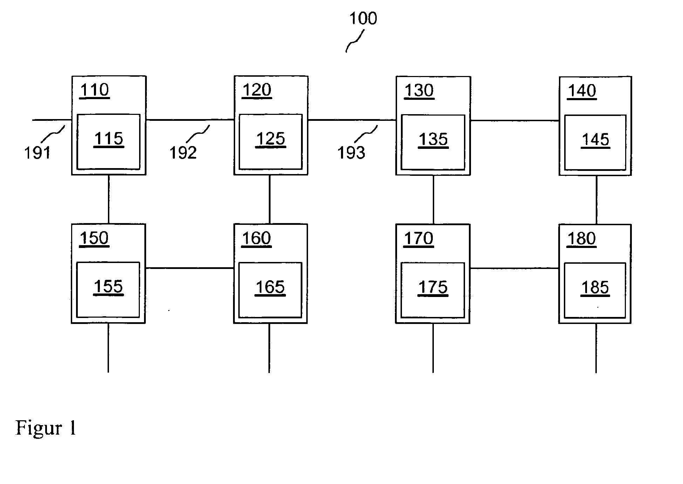

Ein typisches On-Chip-Netzwerk verbindet die Komponenten eines Chips durch eine Menge von Netzwerkcontrollern. Diese Controller besitzen standardmäßig meist mindestens einen internen Puffer, in dem sie Datenpakete vor dem Weiterleiten zwischenspeichern können. Fig. 1 zeigt ein On-Chip-Netzwerk, an dem ein beispielhafter Nachrichtenstau erläutert werden soll. Dabei weist das On-Chip-Netzwerk 100 Netzwerk-controller 110, 120, 130, 140, 150, 160, 170 und 180 auf mit jeweils einer internen Speicheranordnung 115, 125, 135, 145, 155, 165, 175 und 185. Weiterhin ist der Netzwerkcontroller 110 mit Kommunikationsverbindungen 191 und 192 verbunden, der Netzwerkcontroller 120 ist ebenfalls mit der Kommunikationsverbindung 192 und außerdem mit der Kommunikationsverbindung 193 verbunden, der Netzwerkcontroller 130 ist ebenfalls mit der Kommunikationsverbindung 193 verbunden. Über weitere Kommunikationsverbindungen sind miteinander verbunden: Die Netzwerkcontroller 110 mit 150, 150 mit 160, 160 mit 120, 130 mit 170, 130 mit 140, 140 mit 180 sowie 170 mit 180. Die Netzwerkcontroller 110, 150, 160, 170 und 180 weisen jeweils eine weitere Kommunikationsverbindung zu jeweils einem in Fig. 1 nicht gezeigten benachbarten Netzwerkcontroller auf.

In diesem On-Chip-Netzwerk 100 werden nun nach Stand der Technik Nachrichten über festgelegte oder z.B. auch dynamisch bestimmte Routen durch das Netzwerk geleitet. Ist der Puffer /Nachrichtenspeicher eines Netzwerkcontrollers voll, so blockiert dieser in einem normalen Aufbau den Empfang weiterer Pakete. In einem erfindungsgemäßen Systemaufbau ist ein benachbarter Netzwerkcontroller, der Daten an den blockierenden Netzwerkcontroller senden möchte, in der Lage, Prioritätsinformationen mit dem blockierenden Netzwerkcontroller auszutauschen und Nachrichten hoher Priorität an diesen weiterzuleiten. Dabei kommt es zu einem gezielten Tauschen von Nachrichten von unterschiedlich hoher Priorität zwischen zwei Netzwerkcontrollern im Staufall. Dabei nimmt die blockierte Nachricht hoher Priorität auf ihrer Route den Platz einer blockierenden Nachricht niedriger Priorität ein. Die verdrängte Nachricht wird dem freigewordenen Platz der Nachricht hoher Priorität zugewiesen. Auf diese Weise kann unter gewissen Umständen einer Nachricht höchster Priorität eine eindeutig bestimmbare maximale Laufzeit zugeordnet werden. Die Nachrichtenpriorität ist dazu z.B. im Format des Datenpakets mit eingebaut oder wird separat übertragen.

Beispielsweise kommt es zu einem Nachrichtenstau in dem On-Chip-Netzwerk 100 in Fig. 1 zwischen den Netzwerkcontrollern 110 und 120, wenn der Nachrichtenspeicher 125 des Netzwerkcontrollers 120 voll ist, bzw. voll ist für Nachrichten aus dem Netzwerkcontroller 110. Der Grund für einen solchen Nachrichtenstau kann z.B. darin liegen, dass über die Kommunikationsverbindung 192 mehr Nachrichten in einem bestimmten Zeitraum bei dem Netzwerkcontroller 120 eintreffen, die für eine Weiterübermittlung über Kommunikationsverbindung 193 gedacht sind, als der Netzwerkcontroller über die Kommunikationsverbindung 193 in diesem Zeitraum weitergeben kann. Ein weiteres Beispiel für einen Nachrichtenstau, welches besonders gut durch das erfindungsgemäße Vorgehen auflösbar ist, ist der Fall, dass die Kommunikationsverbindung 193 für Nachrichten niedriger Priorität aus dem Netzwerkcontroller 120 gesperrt ist und der Netzwerkcontroller 120 eine volle Speicheranordnung 125 aufweist mit Nachrichten ausschließlich niedrigerer Priorität.

Besonders kritisch ist ein solcher Nachrichtenstau für Nachrichten hoher Priorität, welche in dem Nachrichtenspeicher 115 des Netzwerkcontrollers 110 gespeichert sind und zu einer Übertragung über die Kommunikationsverbindung 192 auf den Netzwerkcontroller 120, bzw. über den Netzwerkcontroller 120 und weiter z.B. über die Kommunikationsverbindung 193 bestimmt sind.

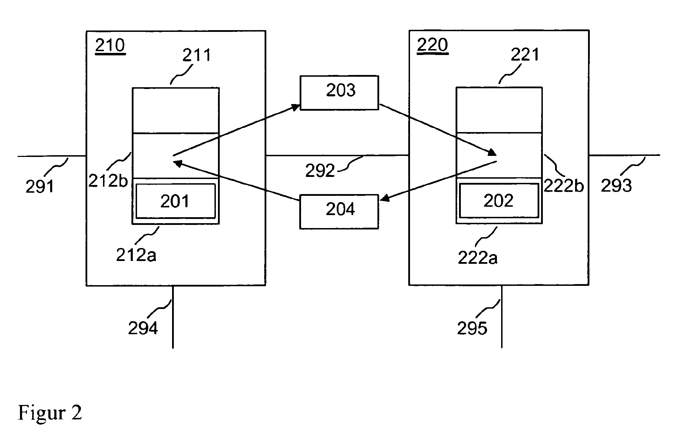

Das erfindungsgemäße Routing wird nun anhand von Fig. 2 für verschiedene Stauprobleme, z.B. auch den anhand von Fig. 1 beschriebenen Nachrichtenstau, erläutert. Dabei zeigt Fig. 2 die Netzwerkcontroller 210 und 220, die vergleichbar den Netzwerkcontrollern 110 und 120 aus Fig. 1 in ein On-Chip-Netzwerk eingebunden sind. Der Netzwerkcontroller 210 weist eine interne Speicheranordnung 211, 212a, 212b auf, welche interne Speicheranordnung 211, 212a, 212b einen Zwischenspeicher 211 sowie Nachrichtenspeichersegmente 212a und 212b aufweist. Weiterhin ist der Netzwerkcontroller 210 mit den Kommunikationsverbindungen 291, 292 und 294 verbunden. Der Netzwerkcontroller 220 weist eine interne Speicheranordnung 221, 222a, 222b auf, welche interne Speicheranordnung 221, 222a, 222b einen Zwischenspeicher 221 sowie Nachrichtenspeichersegmente 222a und 222b aufweist. Weiterhin ist der Netzwerkcontroller 220 mit den Kommunikationsverbindungen 292, 293 und 295 verbunden. In dem in Fig. 2 gezeigten Fall ist in dem Nachrichtenspeichersegment 212a von Netzwerkcontroller 210 eine Nachricht 201 gespeichert, in dem Nachrichtenspeichersegment 222a von Netzwerkcontroller 220 ist eine Nachricht 202 gespeichert. Zu Beginn des mit Fig. 2 beschriebenen Routings sei Nachricht 203 im Nachrichtenspeichersegment 212b des Netzwerkcontrollers 210 gespeichert sowie Nachricht 204 im Nachrichtenspeichersegment 222b des Netzwerkcontrollers 220. Analog zu dem zu Fig. 1 beschriebenen Fall eines Nachrichtenstaus ist der Nachrichtenspeicher 222a, 222b des Netzwerkcontrollers 220 mit den Nachrichten 202 und 204 voll. In dem hier gezeigten Beispiel ist weiterhin auch der Nachrichtenspeicher 212a, 212b des Netzwerkcontrollers 210 mit den Nachrichten 201 und 203 voll.

Erfindungsgemäß tauschen zu einer Lösung der Nachrichtenstau-Problematik, zumindest für Nachrichten höherer Priorität, die Netzwerkcontroller 210 und 220 Prioritätsinformationen über die in ihren Nachrichtenspeichern 212a, 212b bzw. 222a, 222b gespeicherten Nachrichten 201, 203, bzw. 202, 204 aus. Beispielsweise wird nun durch Vergleich der ausgetauschten Prioritätsinformationen festgestellt, dass die im Netzwerkcontroller 210 gespeicherte Nachricht 203 zu einer Übertragung über die Kommunikationsverbindung 292 auf den Netzwerkcontroller 220 bzw. über den Netzwerkcontroller 220 weiter an die Kommunikationsverbindungen 293 oder 295 gedacht ist und weiterhin dass diese Nachricht 203 eine höhere Priorität aufweist als die im Netzwerk-controller 220 gespeicherte Nachricht 204. Aufgrund dieser Feststellung und des durch den vollen Nachrichtenspeicher 222a, 222b festgestellten Nachrichtenstau werden daraufhin erfindungsgemäß die Nachrichten 203 und 204 zwischen den Netzwerkcontrollern 210 und 220 ausgetauscht, das heißt die Nachricht 203 wird von Netzwerkcontroller 210 an Netzwerkcontroller 220 übertragen und aus dem Nachrichtenspeichersegment 212b des Netzwerkcontrollers 210 gelöscht; analog wird Nachricht 204 von Netzwerkcontroller 220 an Netzwerkcontroller 210 übertragen und aus dem Nachrichtenspeichersegment 222b des Netzwerkcontrollers 210 gelöscht.

Dieser erfindungsgemäße Nachrichtenaustausch kann beispielsweise gleichzeitig geschehen, falls die Kommunikationsverbindung 292 und die Netzwerkcontroller 210 und 220 dazu ausgestaltet sind.

Alternativ können die Netzwerkcontroller 210 und 220 wie in Fig. 2 gezeigt auch Zwischenspeicher 211 bzw. 221 aufweisen, in welchen die Nachrichten 203 und 204 beim Nachrichtenaustausch zwischengespeichert werden können.

Im Folgenden soll anhand von Fig. 2 und an zwei alternativen Beispielen detaillierter das Austauschprotokoll zwischen Netzwerkcontroller 210 und seinem Nachbarcontroller 220 beschrieben werden.

Im ersten Beispiel sei der Nachrichtenspeicher 212a, 212b des Netzwerkcontrollers 210 voll und der Nachbarcontroller 220 hat mindestens eine Nachricht 204 in seinem Nachrichtenspeicher 222a, 222b gespeichert, die für eine Übertragung über die Kommunikationsleitung 292 auf den Netzwerkcontroller 210 vorgesehen ist bzw. für eine Übertragung über die Kommunikationsleitung 292 und über den Netzwerkcontroller 210 weiter über die Kommunikationsleitungen 291 oder 294. Damit liegt ein Nachrichtenstau zwischen dem Netzwerkcontroller 210 und dem Nachbarcontroller 220 vor. In diesem Beispiel überträgt der Nachbarcontroller 220 nun die Prioritätsinformationen der Nachricht mit der höchsten Priorität, welche für eine Übertragung auf oder über den Netzwerkcontroller 210 vorgesehen ist, z.B. Nachricht 204, an den Netzwerkcontroller 210. Alternativ kann auch vorgesehen sein, dass der Nachbarcontroller 220 die Prioritätsinformationen aller in seinem Nachrichtenspeicher 222a, 222b gespeicherten Nachrichten 202 und 204, oder zumindest aller Nachrichten, die für eine Übertragung zu dem Netzwerkcontroller 210 vorgesehen sind, 204, an diesen Netzwerkcontroller 210 überträgt. Der Netzwerkcontroller 210 vergleicht nun die vom Nachbarcontroller 220 empfangenen Prioritätsinformationen mit den Prioritätsinformationen der in seinem Nachrichtenspeicher 212a, 212b gespeicherten Nachrichten 201 und 203. In dem Fall, dass die Priorität der Nachricht 204 höher ist als die Priorität einer der Nachrichten 201 und 203, initiiert der Netzwerkcontroller 210 über ein Signal den Austausch von Nachrichten mit dem Nachbarcontroller 220. Analog zu Fig. 1 ist z.B. die Priorität der Nachricht 203 niedriger als die Priorität der Nachricht 204. Der Netzwerkcontroller 210 schickt eine Benachrichtigung über den geplanten Austausch der Nachrichten 203 und 204 an den Nachbarcontroller 220, dieser Nachbarcontroller 220 bestätigt gegebenenfalls mit einem Bestätigungssignal an Netzwerkcontroller 210. Daraufhin wird die Nachricht 204 von dem Nachrichtenspeichersegment 222b des Nachbarcontrollers 220 in das Nachrichtenspeichersegment 212b des Netzwerkcontrollers 210 übertragen und überschreibt damit die Nachricht 203 und gleichzeitig wird die Nachricht 203 von dem Nachrichtenspeichersegment 212b des Netzwerkcontrollers 210 in das Nachrichtenspeichersegment 222b des Nachbarcontrollers 220 übertragen und überschreibt damit die Nachricht 204. Alternativ kann auch eine der Nachrichten 203, 204 erst in einen Zwischenspeicher 211, 221 übertragen und aus dem entsprechenden Nachrichtenspeichersegment gelöscht werden und dann die andere der Nachrichten 203, 204 übertragen und aus dem entsprechenden Nachrichtenspeichersegment gelöscht werden, falls eine synchrone Nachrichtenübertragung nicht unterstützt wird.

Im zweiten Beispiel ist der Nachrichtenspeicher 222a, 222b des Nachbarcontrollers 220 voll und es liegt ein Nachrichtenstau zwischen Netzwerkcontroller 210 und Nachbarcontroller 220 vor. In diesem Beispiel sendet nun der Nachbarcontroller 220 Prioritätsinformationen aller seiner gespeicherten Nachrichten 202 und 204 oder vorzugsweise nur die Prioritätsinformation der Nachricht mit der niedrigsten Priorität der Nachrichten 202 und 204 an Netzwerkcontroller 210. Der Netzwerkcontroller 210 vergleicht wie oben beschrieben die empfangenen Prioritätsinformationen mit den Prioritätsinformationen der eigenen Nachrichten 201 und 203 und initiiert einen Nachrichtenaustausch für den Fall, dass eine seiner Nachrichten 201 oder 203 eine höhere Priorität hat als eine der Nachrichten 202 oder 204, und dass diese Nachricht, analog zu Fig. 2 ist das Nachricht 203, für die Übertragung auf oder über den Nachbarcontroller 220 bestimmt ist. Der Nachrichtenaustausch der Nachrichten 203 und 204 verläuft dann analog wie oben beschrieben.

Alternativ zu dem in Fig. 2 gezeigten Zwischenspeicher zur Zwischenspeicherung von Nachrichten beim erfindungsgemäßen Nachrichtenaustausch und alternativ zur synchronen Nachrichtenübertragung beim erfindungsgemäßen Nachrichtenaustausch kann auch ein separater Speicherplatz in den Nachrichtenspeichern der Netzwerkcontroller freigehalten werden, damit dort im Fall eines erfindungsgemäßen Nachrichtenaustauschs eine Nachricht zwischengespeichert werden kann.

Die Prioritätsinformationen der Nachrichten können vorzugsweise im Datenpaketformat der Nachrichten, z.B. im Nachrichtenkopf abgelegt sein. Eine alternative Möglichkeit ist eine separate Übertragung über die Kommunikationsverbindungen der Nachrichtenübertragung oder auch über separate Kommunikationsverbindungen zwischen den Netzwerkcontrollern eines On-Chip-Netzwerks. Die in Fig. 1 und Fig. 2 abgebildeten Kommunikationsverbindungen sind dabei nicht beschränkt auf Ein-Draht-Leitungen. Z. B. müssen für eine parallele Datenübertragung beim Datenaustausch, wie oben als Alternative beschrieben, auch parallele Datenkanäle zwischen den Netzwerkcontroller verfügbar sein. Neben der Nachrichten-/Datenübertragung müssen für das erfindungsgemäße Verfahren auch Steuerinformationen (Initiieren bzw. Bestätigen des Austauschs) und die Prioritätsinformationen zwischen den Netzwerkcontrollern übertragen werden. Diese Anforderungen können auf Protokollebene, über mehrere Datenleitungen oder z.B. auch über Multiplexverfahren erfüllt werden.

Auf System-/ Netzwerkebene kann die Erfindung vorzugsweise so umgesetzt sein, dass alle Netzwerkcontroller erfindungsgemäß arbeiten können. Beispielsweise leiten alle Controller die Prioritätsinformationen der Pakete der höchsten Priorität in ihrem Puffer an die Nachbarknoten, die auf der Route dieser Nachrichten liegen. Ein Netzwerkcontroller, der die Nachrichten in seinem vollen Nachrichtenspeicher aufgrund von Stausituationen nicht weiterleiten kann, überprüft an seinen Nachrichteneingängen die Prioritätsinformation seiner Nachbarcontroller. Der Netzwerkcontroller mit dem vollen Nachrichtenspeicher erkennt, ob eine Nachricht höherer Priorität von einem seiner Nachbarn empfangen werden muss als die Priorität einer seiner gepufferten Nachrichten. In diesem Fall initiiert der Netzwerkcontroller mit dem vollen Nachrichtenspeicher einen Nachrichtenaustausch wie oben beschrieben. Die Rolle des Initiators des Protokolls kann wie ebenfalls oben beschrieben auch getauscht sein. Dazu leiten die Nachbarcontroller mit vollem Nachrichtenspeicher die Information der niedrigsten Nachrichtenpriorität von Nachrichten in ihren Nachrichtenspeichern an alle benachbarten Netzwerkcontroller. Ein Netzwerkcontroller erkennt, wenn er eine Nachricht höherer Priorität an den Nachbarcontroller senden muss und initiiert den Nachrichtenaustausch.

Auf Netzwerkebene kann vorzugsweise auch vorgesehen sein, dass ein Netzwerkcontroller nicht nur mit einem Nachbarcontroller sondern mit mehreren Nachbarcontrollern, gegebenenfalls auch gleichzeitig, erfindungsgemäß Prioritätsinformation und Nachrichten austauscht. In einem solchen Fall kann ein Netzwerkcontroller nicht nur einen Nachrichtenspeicher und / oder Zwischenspeicher sondern mehrere Nachrichtenspeicher bzw. Zwischenspeicher, vorzugsweise einen Nachrichtenspeicher und / oder einen Zwischenspeicher für jeden Nachbarcontroller, aufweisen.

Durch das erfindungsgemäße Verfahren wird ein Paket (eine Nachricht) höchster Priorität im Staufall nur durch den entstehenden Aufwand des Protokolls an der Weiterleitung gehindert. Eine klare Abhängigkeit von Paketen niederer Priorität, die durch Stauungen die Weiterleitung verhindern könnten, entfällt. Nach nachfolgender Formel kann damit die maximale Laufzeit eines Paketes höchster Priorität bestimmt werden. Sei n die Anzahl der Netzwerk-Controller, die ein Paket auf seiner Route vom Startcontroller zum Endcontroller passieren muss. Im schlimmsten Fall muss für jeden dieser n Controller das obige Verfahren durchgeführt werden. Weiterhin sei m die Anzahl der Zeiteinheiten, die das Verfahren für den Austausch von Nachrichten benötigt, t seien die Zeiteinheiten (z.B. Taktzyklen oder Zeitbedarf bei asynchronen Netzen), die für die Übertragung eines Pakets zwischen 2 benachbarten Controllern notwendig sind. Damit ergibt sich die maximale Laufzeit für Pakete höchster Priorität bei bekannter Route direkt als

$$T = (n - 1) * (m + t)$$

Dabei wurde allerdings davon ausgegangen, dass nur eine Nachricht/ ein Paket bzw. ausreichend wenige Nachrichten / Pakete höchster Priorität im Netzwerk vorhanden sind. Das Verfahren hat keine deterministische Laufzeitvoraussage, falls es zu einem Fall kommt, in welchem ein Stau z.B. ausschließlich durch Nachrichten höchster Priorität ausgelöst wäre (also ein Nachrichtenspeicher eines Netzwerkcontrollers voll ist mit Nachrichten höchster Priorität, keine Weiterleitung dieser Nachrichten möglich ist und in einem benachbarten Netzwerkcontroller eine weitere Nachricht höchster Priorität aufgrund dieses Staus warten muss).

Für Pakete niedriger Priorität bleibt eine Aussage über die Laufzeit in jedem Fall schwierig. Um zu verhindern, dass durch das erfindungsgemäße Verfahren Nachrichten niedrigerer Priorität sehr lange Übertragungszeiten aufweisen bzw. evtl. gar nicht ihr Bestimmungsziel erreichen, wird vorgeschlagen, dass die Nachrichten niedriger Priorität eine Erhöhung ihrer Priorität erfahren, z.B. in Abhängigkeit der Anzahl durchlaufener Netzwerkcontroller und / oder auch in Abhängigkeit der Anzahl erfindungsgemäßer Nachrichtenaustausch-Vorgänge, an denen sie beteiligt waren.

Um das Nachrichtenrouting in einem On-Chip-Netzwerk besonders effizient zu gestalten, wird auch vorgeschlagen, das erfindungsgemäße Verfahren gemeinsam mit vorhandenen Routingverfahren, z. B. dynamischen Routingverfahren zu kombinieren. Das erfindungsgemäße Verfahren kann in einem solchen Fall im Algorithmus der dynamischen Routenbestimmung berücksichtigt werden.

## Patentansprüche

1. Netzwerkcontroller (210) in einem Netzwerk (100) mit mindestens einem Nachrichtenspeicher (212a, 212b) und mit Mitteln zum Empfang und zur Weitergabe von Nachrichten,
**dadurch gekennzeichnet,**

- **dass** der Netzwerkcontroller (210) Mittel aufweist, von mindestens einem Nachbarcontroller (220) Prioritätsinformationen von in dem Nachbarcontroller (220) gespeicherten Nachrichten (202, 204) zu empfangen, wobei der Nachbarcontroller (220) ein dem Netzwerkcontroller (210) in dem Netzwerk (100) benachbarter zweiter Netzwerkcontroller ist,
- **dass** der Netzwerkcontroller (210) Mittel aufweist, die Prioritätsinformationen von in dem Nachbarcontroller (220) gespeicherten Nachrichten (202, 204) mit Prioritätsinformationen von in dem Nachrichtenspeicher (212a, 212b) gespeicherten Nachrichten (201, 203) zu vergleichen,

- **dass** der Netzwerkcontroller (210) Mittel aufweist, im Fall eines Nachrichtenstaus zwischen dem Netzwerkcontroller (210) und dem Nachbarcontroller (220) in Abhängigkeit des Vergleichs der Prioritätsinformationen mindestens eine erste in dem Nachrichtenspeicher (212a, 212b) gespeicherte Nachricht (203) zu dem Nachbarcontroller (220) zu senden und die erste Nachricht (203) aus dem Nachrichtenspeicher (212a, 212b) zu löschen sowie mindestens eine zweite in dem Nachbarcontroller (220) gespeicherte Nachricht (204) von dem Nachbarcontroller (220) zu empfangen und die zweite Nachricht (204) im Nachrichtenspeicher (212a, 212b) zu speichern,

- **dass** der Netzwerkcontroller (210) Mittel aufweist, im Fall, dass der Nachrichtenstau dadurch gegeben ist, dass der Nachrichtenspeicher (212a, 212b) voll ist, die Prioritätsinformationen auf ein erstes Ergebnis hin zu vergleichen, ob die erste, in dem Nachrichtenspeicher (212a, 212b) gespeicherte Nachricht (203) eine niedrigere Priorität hat als die zweite in dem Nachbarcontroller (220) gespeicherte Nachricht (204), welche zu einer Übertragung auf oder über den Netzwerkcontroller (210) vorgesehen ist, und Mittel aufweist, falls das erste Ergebnis zutrifft, die erste Nachricht (203) an den Nachbarcontroller (220) zu

- senden und im Nachrichtenspeicher (212a, 212b) die erste Nachricht (203) durch die zweite Nachricht (204) zu ersetzen.

2. Netzwerkcontroller (210) in einem Netzwerk (100) mit mindestens einem Nachrichtenspeicher (212a, 212b) und mit Mitteln zum Empfang und zur Weitergabe von Nachrichten, **dadurch gekennzeichnet,**

- **dass** der Netzwerkcontroller (210) Mittel aufweist, von mindestens einem Nachbarcontroller (220) Prioritätsinformationen von in dem Nachbarcontroller (220) gespeicherten Nachrichten (202, 204) zu empfangen, wobei der Nachbarcontroller (220) ein dem Netzwerkcontroller (210) in dem Netzwerk (100) benachbarter zweiter Netzwerkcontroller ist,

- **dass** der Netzwerkcontroller (210) Mittel aufweist, die Prioritätsinformationen von in dem Nachbarcontroller (220) gespeicherten Nachrichten (202, 204) mit Prioritätsinformationen von in dem Nachrichtenspeicher (212a, 212b) gespeicherten Nachrichten (201, 203) zu vergleichen,

- **dass** der Netzwerkcontroller (210) Mittel aufweist, im Fall, dass der Nachrichtenstau dadurch gegeben ist, dass ein erster Speicher (222a, 222b) des Nachbarcontrollers (220) voll ist, die Prioritätsinformationen auf ein zweites Ergebnis hin zu vergleichen, ob die erste, in dem Nachrichtenspeicher (212a, 212b) gespeicherte Nachricht (203), welche zu einer Übertragung auf oder über den Nachbarcontroller (220) vorgesehen ist, eine höhere Priorität hat als die zweite in dem Nachbarcontroller (220) gespeicherte Nachricht (204), und Mittel aufweist, falls das zweite Ergebnis zutrifft, die erste Nachricht (203) an den Nachbarcontroller (220) zu senden und im Nachrichtenspeicher (212a, 212b) die erste Nachricht (203) durch die zweite Nachricht (204) zu ersetzen.

3. Netzwerkcontroller (210) nach Anspruch 1, **dadurch gekennzeichnet, dass** der Netzwerkcontroller (210) Mittel aufweist, die Priorität der ersetzten ersten Nachricht (203) in Abhängigkeit einer Anzahl von Ersetzungsvorgängen und / oder einer Anzahl an besuchten Netzwerkcontrollern der ersten Nachricht (203) zu erhöhen.

4. Netzwerkcontroller (210) nach Anspruch 2, **dadurch gekennzeichnet, dass** der Netzwerkcontroller (210) Mittel aufweist, die Priorität der ersetzenden zweiten Nachricht (204) in Abhängigkeit einer Anzahl von Ersetzungsvorgängen und / oder einer Anzahl an besuchten Netzwerkcontrollern der zweiten Nachricht (204) zu erhöhen.

5. Netzwerkcontroller (210) nach einem der vorangegangenen Ansprüche, **dadurch gekennzeichnet, dass** der Netzwerkcontroller mindestens einen reservierten Speicherplatz zum Zwischenspeichern einer Nachricht (204) beim Austausch der ersten Nachricht (203) mit der zweiten Nachricht (204) aufweist.

6. Netzwerkcontroller (210) nach Anspruch 5, **dadurch gekennzeichnet, dass** der reservierte Speicherplatz durch einen separaten Zwischenspeicher (211) realisiert ist.

7. Netzwerk (100) mit Netzwerkcontrollern (210, 220) zum Empfang, zur Zwischenspeicherung und zur Weitergabe von Nachrichten, **dadurch gekennzeichnet,**

- **dass** mindestens zwei benachbarte Netzwerkcontroller (210, 220) Mittel aufweisen, Prioritätsinformationen von in den zwei benachbarten Netzwerkcontrollern (210, 220) gespeicherten Nachrichten auszutauschen,

- **dass** mindestens ein erster oder ein zweiter der mindestens zwei benachbarten Netzwerkcontroller (210, 220) Mittel aufweist, die Prioritätsinformationen zu vergleichen, und

- **dass** die mindestens zwei benachbarten Netzwerkcontroller (210, 220) Mittel aufweisen, im Fall eines vollen Nachrichtenspeichers des ersten der mindestens zwei benachbarten Netzwerkcontroller (210, 220) eine erste Nachricht niedrigerer Priorität aus dem vollen Nachrichtenspeicher des ersten Netzwerkcontrollers zu dem zweiten der mindestens zwei benachbarten Netzwerkcontroller (210, 220) zu senden, die erste Nachricht aus dem vollen Nachrichtenspeicher des ersten Netzwerkcontrollers zu löschen, eine zweite Nachricht höherer Priorität aus einem Nachrichtenspeicher des zweiten Netzwerkcontrollers, welche zweite Nachricht für eine Übertragung auf oder über den ersten Netzwerkcontroller bestimmt ist, von dem zweiten Netzwerkcontroller zu dem ersten Netzwerkcontroller zu senden und aus dem Nachrichtenspeichers des zweiten Netzwerkcontrollers die zweite Nachricht zu löschen.

8. Netzwerk (100) nach Anspruch 7, **dadurch gekennzeichnet, dass** der Austausch der Prioriätsinformationen zwischen den mindestens zwei benachbarten Netzwerkcontollern (210, 220) über andere Datenkanäle, insbesondere andere Datenverbindungen, stattfindet als eine Übertragung der Nachrichten.

9. Netzwerk (100) nach Anspruch 7, **dadurch gekennzeichnet, dass** der Austausch der Prioriätsinformationen zwischen den mindestens zwei benachbarten Netzwerkcontollern (210, 220) über Datenkanäle für eine Übertragung der Nachrichten stattfindet.

10. Routingverfahren für Nachrichten in einem Netzwerk (100), wobei das Netzwerk (100) Netzwerkcontroller (210, 220) aufweist zum Empfang, zur Zwischenspeicherung und zur Weitergabe von Nachrichten, **dadurch gekennzeichnet,**

    - **dass** mindestens zwei benachbarte Netzwerkcontroller (210, 220) Prioritätsinformationen von in den zwei benachbarten Netzwerkcontrollern (210, 220) gespeicherten Nachrichten austauschen,
    - **dass** mindestens ein erster oder ein zweiter der mindestens zwei benachbarten Netzwerkcontroller (210, 220) die Prioritätsinformationen vergleicht, und
    - **dass** im Fall eines vollen Nachrichtenspeichers des ersten der mindestens zwei benachbarten Netzwerkcontroller (210, 220) eine erste Nachricht niedrigerer Priorität aus dem vollen Nachrichtenspeicher des ersten Netzwerkcontrollers zu dem zweiten der mindestens zwei benachbarten Netzwerkcontroller (210, 220) gesendet wird, die erste Nachricht aus dem vollen Nachrichtenspeicher des ersten Netzwerkcontrollers gelöscht wird, eine zweite Nachricht höherer Priorität aus einem Nachrichtenspeicher des zweiten Netzwerkcontrollers, welche zweite Nachricht für eine Übertragung auf oder über den ersten Netzwerkcontroller bestimmt ist, von dem zweiten Netzwerkcontroller zu dem ersten Netzwerkcontroller gesendet wird und aus dem Nachrichtenspeichers des zweiten Netzwerkcontrollers die zweite Nachricht gelöscht wird.

11. Routingverfahren nach Anspruch 10, **dadurch gekennzeichnet, dass** die Prioritätsinformationen der Nachrichten in einem Datenpaketformat der Nachrichten gespeichert sind.

12. Routingverfahren nach Anspruch 10, **dadurch gekennzeichnet, dass** die Prioritätsinformationen der Nachrichten zusätzlich zu den Nachrichten übertragen werden.


## Claims

1. Network controller (210) in a network (100) having at least one message memory (212a, 212b) and having means for receiving and for passing on messages, **characterized**

   - **in that** the network controller (210) has means for receiving, from at least one adjacent controller (220), priority information of messages (202, 204) stored in the adjacent controller (220), wherein the adjacent controller (220) is a second network controller which is adjacent to the network controller (210) in the network (100),
   - **in that** the network controller (210) has means for comparing the priority information of messages (202, 204) stored in the adjacent controller (220) with priority information of messages (201, 203) stored in the message memory (212a, 212b),
   - **in that** the network controller (210) has means for transmitting, in the case of message congestion between the network controller (210) and the adjacent controller (220), at least a first message (203), stored in the message memory (212a, 212b), to the adjacent controller (220) and for deleting the first message (203) from the message memory (212a, 212b) as a function of the comparison of the priority information, as well as for receiving at least a second message (204), stored in the adjacent controller (220), from the adjacent controller (220) and for storing the second message (204) in the message memory (212a, 212b),
- **in that** the network controller (210) has means for comparing, in the event of the message congestion being due to the message memory (212a, 212b) being full, the priority information with respect to a first result indicating whether the first message (203) which is stored in the message memory (212a, 212b) has a lower priority than the second message (204) which is stored in the adjacent controller (220) and which is provided for transmission to or via the network controller (210), and has means for transmitting, if the first result occurs, the first message (203) to the adjacent controller (220) and for replacing the first message (203) in the message memory (212a, 212b) by the second message (204).

2. Network controller (210) in a network (100) having at least one message memory (212a, 212b) and having means for receiving and for passing on messages,
**characterized**

- **in that** the network controller (210) has means for receiving, from at least one adjacent controller (220), priority information of messages (202, 204) stored in the adjacent controller (220), wherein the adjacent controller (220) is a second network controller which is adjacent to the network controller (210) in the network (100),
- **in that** the network controller (210) has means for comparing the priority information of messages (202, 204) stored in the adjacent controller (220) with priority information of messages (201, 203) stored in the message memory (212a, 212b),
- **in that** the network controller (210) has means for comparing, in the event of the message congestion being due to a first memory (222a, 222b) of the adjacent controller (220) being full, the priority information with respect to a second result indicating whether the first message (203), which is stored in the message memory (212a, 212b) and is provided for transmission to or via the adjacent controller (220), has a higher priority than the second message (204) which is stored in the adjacent controller (220), and has means for transmitting, if the second result occurs, the first message (203) to the adjacent controller (220), and for replacing the first message (203) in the message memory (212a, 212b) by the second message (204).

3. Network controller (210) according to Claim 1, **characterized in that** the network controller (210) has means for increasing the priority of the replaced first message (203) as a function of a number of replacement processes and/or a number of searched-for network controllers of the first message (203).

4. Network controller (210) according to Claim 2, **characterized in that** the network controller (210) has means for increasing the priority of the replacing, second message (204) as a function of a number of replacement processes and/or a number of searched-for network controllers of the second message (204).

5. Network controller (210) according to one of the preceding claims, **characterized in that** the network controller has at least one reserved memory location for buffering a message (204) when the first message (203) is exchanged for the second message (204).

6. Network controller (210) according to Claim 5, **characterized in that** the reserved memory location is implemented by means of a separate buffer (211).

7. Network (100) having network controllers (210, 220) for receiving, for buffering and for passing on messages,
**characterized**

- **in that** at least two adjacent network controllers (210, 220) have means for exchanging priority information of messages stored in the two adjacent network controllers (210, 220),
- **in that** at least a first or a second of the at least two adjacent network controllers (210, 220) has means for comparing the priority information, and
- **in that** the at least two adjacent network controllers (210, 220) have means for transmitting, in the event of a full message memory of the first of the at least two adjacent network controllers (210, 220), a first message of relatively low priority from the full message memory of the first network controller to the second of the at least two adjacent network controllers (210, 220), for deleting the first message from the full message memory of the first network controller, for transmitting a second message of relatively high priority from a message memory of the second network controller, which second message is intended for transmission to or via the first network controller, from the second network controller to the first network controller, and for deleting the second message from the message memory of the second network controller.

8.  Network (100) according to Claim 7, **characterized in that** the exchange of the priority information between the at least two adjacent network controllers (210, 220) takes place via other data channels, in particular other data connections, than transmission of the messages.

9.  Network (100) according to Claim 7, **characterized in that** the exchange of the priority information between the at least two adjacent network controllers (210, 220) takes place via data channels for transmission of the messages.

10. Routing method for messages in a network (100), wherein the network (100) has network controllers (210, 220) for receiving, for buffering and for passing on messages,
    **characterized**

    - **in that** at least two adjacent network controllers (210, 220) exchange priority information of messages stored in the two adjacent network controllers (210, 220),
    - **in that** at least a first or a second of the at least two adjacent network controllers (210, 220) compares the priority information, and
    - **in that** in the event of a full message memory of the first of the at least two adjacent network controllers (210, 220), a first message of relatively low priority from the full message memory of the first network controller is transmitted to the second of the at least two adjacent network controllers (210, 220), the first message is deleted from the full message memory of the first network controller, a second message of relatively high priority from a message memory of the second network controller, which second message is intended for transmission to or via the first network controller, is transmitted from the second network controller to the first network controller, and the second message is deleted from the message memory of the second network controller.

11. Routing method according to Claim 10, **characterized in that** the priority information of the messages is stored in a data packet format of the messages.

12. Routing method according to Claim 10, **characterized in that** the priority information of the messages is transmitted in addition to the messages.

**Revendications**

1.  Contrôleur de réseau (210) dans un réseau (100), comportant au moins une mémoire de messages (212a, 212b) et comportant des moyens destinés à recevoir et à retransmettre des messages,
    **caractérisé**

    - **en ce que** le contrôleur de réseau (210) comprend des moyens destinés à recevoir d'au moins un contrôleur voisin (220) des informations de priorité de messages (202, 204) stockés dans le contrôleur voisin (220), dans lequel le contrôleur voisin (220) est un second contrôleur de réseau voisin du contrôleur de réseau (210) dans le réseau (100),
    - **en ce que** le contrôleur de réseau (210) comprend des moyens destinés à comparer les informations de priorité de messages (202, 204) stockés dans le contrôleur voisin (220) à des informations de priorité de messages (201, 203) stockés dans la mémoire de messages (212a, 212b),
    - **en ce que** le contrôleur de réseau (210) comprend des moyens destinés, en cas de saturation de messages entre le contrôleur de réseau (210) et le contrôleur voisin (220), à envoyer au contrôleur voisin (220), en fonction de la comparaison des informations de priorité, au moins un premier message (203) stocké dans le contrôleur de messages (212a, 212b) et à supprimer de la mémoire de messages (212a, 212b) le premier message (203), et à recevoir du contrôleur voisin (220) au moins un second message (204) stocké dans le contrôleur voisin (220) et à stocker le second message (204) dans la mémoire de messages (212a, 212b),
    - **en ce que** le contrôleur de réseau (210) comprend des moyens destinés, dans le cas où l'encombrement de messages résulte du fait que la mémoire de messages (212a, 212b) est pleine, à comparer les informations de priorité à un premier résultat indiquant si le premier message (203) stocké dans la mémoire de messages (212a, 212b), lequel message est destiné à être transmis sur ou par l'intermédiaire du contrôleur de réseau (210), possède une priorité plus faible que le second message (204) stocké dans le contrôleur voisin (220), et comprend des moyens destinés, dans le cas où le premier résultat se vérifie, à envoyer le premier message (203) au contrôleur voisin (220) et à remplacer le premier message (203) par le second message (204) dans la mémoire de messages (212a, 212b).

2. Contrôleur de réseau (210) dans un réseau (100), comportant au moins une mémoire de messages (212a, 212b) et comportant des moyens destinés à recevoir et à retransmettre des messages, **caractérisé**

- **en ce que** le contrôleur de réseau (210) comprend des moyens destinés à recevoir d'au moins un contrôleur voisin (220) des informations de priorité de messages (202, 204) stockés dans le contrôleur voisin (220), dans lequel le contrôleur voisin (220) est un second contrôleur de réseau voisin du contrôleur de réseau (210) dans le réseau (100),
- **en ce que** le contrôleur de réseau (210) comprend des moyens destinés à comparer les informations de priorité de messages (202, 204) stockés dans le contrôleur voisin (220) à des informations de priorité de messages (201, 203) stockés dans la mémoire de messages (212a, 212b),
- **en ce que** le contrôleur de réseau (210) comprend des moyens destinés, dans le cas où la saturation de messages est provoquée par le fait qu'une première mémoire (222a, 222b) du contrôleur voisin (220) est pleine, à comparer les informations de priorité à un second résultat indiquant si le premier message (203) stocké dans la mémoire de message (212a,212b), lequel message est destiné à être transmis sur ou par l'intermédiaire du contrôleur voisin (220), possède une priorité plus élevée que le second message (204) stocké dans le contrôleur voisin (220), et comprend des moyens destinés, dans le cas où le second résultat se vérifie, à envoyer le premier message (203) au contrôleur voisin (220) et à remplacer le premier message (203) par le second message (204) dans la mémoire de messages (212a, 212b).

3. Contrôleur de réseau (210) selon la revendication 1, **caractérisé en ce que** le contrôleur de réseau (210) comprend des moyens destinés à augmenter la priorité du premier message remplacé (203) en fonction d'un nombre de processus de remplacement et/ou d'un nombre de contrôleurs de réseau visités du premier message (203).

4. Contrôleur de réseau (210) selon la revendication 2, **caractérisé en ce que** le contrôleur de réseau (210) comprend des moyens destinés à augmenter la priorité du second message de remplacement (204) en fonction d'un nombre de processus de remplacement et/ou d'un nombre de contrôleurs de réseau visités du second message (204).

5. Contrôleur de réseau (210) selon l'une quelconque des revendications précédentes, **caractérisé en ce que** le contrôleur de réseau comprend au moins un emplacement de mémoire réservé pour la mise en tampon d'un message (204) lors du remplacement du premier message (203) par le second message (204).

6. Contrôleur de réseau (210) selon la revendication 5, **caractérisé en ce que** l'emplacement de mémoire réservé est réalisé sous la forme d'une mémoire tampon séparée (211).

7. Réseau (100) comprenant des contrôleurs de réseau (210, 220) destinés à recevoir, à mettre en tampon et à retransmettre des messages, **caractérisé**

- **en ce qu'**au moins deux contrôleurs de réseau voisins (210, 220) comprennent des moyens destinés à échanger des informations de priorité de messages stockés dans les deux contrôleurs de réseau voisins (210, 220),
- **en ce qu'**au moins un premier ou un second des au moins deux contrôleurs de réseau voisins (210, 220) comprend des moyens destinés à comparer les informations de priorité, et
- **en ce que** les au moins deux contrôleurs de réseau voisins (210, 220) comprennent des moyens destinés, dans le cas où une mémoire de messages du premier des au moins deux contrôleurs de réseau voisins (210, 220) est pleine, à envoyer un premier message de priorité plus faible de la mémoire de messages pleine du premier contrôleur de réseau au second des au moins deux contrôleurs de réseau voisins (210, 220), à supprimer le premier message de la mémoire de messages pleine du premier contrôleur de réseau, à envoyer un second message de priorité plus élevée provenant d'une mémoire de messages du second contrôleur de réseau, lequel second message est destiné à être transmis sur ou par l'intermédiaire du premier contrôleur de réseau, du second contrôleur de réseau au premier contrôleur de réseau, et à supprimer le second message de la mémoire de messages du second contrôleur de réseau.

8. Réseau (100) selon la revendication 7, **caractérisé en ce que** l'échange des informations de priorité entre les au moins deux contrôleurs de réseau voisins (210, 220) s'effectue par l'intermédiaire de canaux de données, notamment de liaisons de données, autres qu'une transmission des messages.

9. Réseau (100) selon la revendication 7, **caractérisé en ce que** l'échange des informations de priorité entre les au moins deux contrôleurs de réseau voisins (210, 220) s'effectue par l'intermédiaire de canaux de données destinés à la transmission des messages.

10. Procédé de routage de messages dans un réseau (100), dans lequel le réseau (100) comprend des contrôleurs de réseau (210, 220) destinés à recevoir, à mettre en tampon et à retransmettre des messages, **caractérisé :**

- **en ce qu'**au moins deux contrôleurs de réseau voisins (210, 220) échangent des informations de priorité de messages stockés dans les deux contrôleurs de réseau voisins (210, 220),
- **en ce qu'**au moins un premier ou un second des au moins deux contrôleurs de réseau voisins (210, 220) compare les informations de priorité, et
- **en ce que**, dans le cas où une mémoire de messages du premier des au moins deux contrôleurs de réseau voisins (210, 220) est pleine, un premier message de priorité plus faible provenant de la mémoire de messages du premier contrôleur de réseau est envoyé au second des au moins deux contrôleurs de réseau voisins (210, 220), le premier message est supprimé de la mémoire de messages pleine du premier contrôleur de réseau, un second message de priorité plus élevée provenant d'une mémoire de messages du second contrôleur de réseau, lequel second message est destiné à être transmis sur ou par l'intermédiaire du premier contrôleur de réseau, est envoyé du second contrôleur de réseau au premier contrôleur de réseau et le second message est supprimé de la mémoire de messages du second contrôleur de réseau.

11. Procédé de routage selon la revendication 10, **caractérisé en ce que** les informations de priorité des messages sont stockées dans un format de paquet de données des messages.

12. Procédé de routage selon la revendication 10, **caractérisé en ce que** les informations de priorité des messages sont transmises en plus des messages.

100

| 110 | 120 | 130 | 140 |
| 115 | 125 | 135 | 145 |

191    192    193

| 150 | 160 | 170 | 180 |
| 155 | 165 | 175 | 185 |

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1895720 A1
- US 2008037429 A1

- US 2007140282 A1